(19) Europäisches Patentamt
European Patent Office
Office européen des brevets

(11) Veröffentlichungsnummer: **0 407 832 A2**

# (12) EUROPÄISCHE PATENTANMELDUNG

(21) Anmeldenummer: **90112407.3**

(22) Anmeldetag: **29.06.90**

(51) Int. Cl.5: **C08L 77/00**, C08L 71/12, C08K 7/06

(30) Priorität: **11.07.89 DE 3922739**

(43) Veröffentlichungstag der Anmeldung: **16.01.91 Patentblatt 91/03**

(84) Benannte Vertragsstaaten: **BE DE ES FR GB NL**

(71) Anmelder: **BASF Aktiengesellschaft**
**Carl-Bosch-Strasse 38**
**D-6700 Ludwigshafen(DE)**

(72) Erfinder: **Muehlbach, Klaus, Dr.**
**Dr.-Heinrich-Winter-Strasse 19**
**D-6148 Heppenheim(DE)**
Erfinder: **Steiert, Peter, Dr.**
**Madenburgstrasse 10**
**D-6700 Ludwigshafen(DE)**
Erfinder: **Benker, Klaus**
**Fuerstenweg 52**
**D-6730 Neustadt(DE)**

## (54) Verstärkte farbige thermoplastische Formmassen auf der Basis von Polyphenylenethern und Polyamiden.

(57) Füllstoffhaltige thermoplastische Formmassen, enthaltend als wesentliche Komponenten

A) 10 bis 84,8 Gew.% eines thermoplastischen Polyamids,
B) 10 bis 84,8 Gew.% eines modifizierten Polyphenylenethers,
C) 5 bis 50 Gew.% Glas- oder Kohlenstoff-Fasern oder deren Mischungen mit einer mittleren Faserlänge $\overline{l_{50}}$ von 150 bis 400 µm und
D) 0,2 bis 4 Gew.% eines Pigmentes

E) 0 bis 4 Gew.% eines schlagzähmodifizierenden Kautschuks,
F) 0 bis 20 Gew.% eines von D) verschiedenen teilchenförmigen Füllstoffes und
G) 0 bis 20 Gew.% eines Flammschutzmittels.

EP 0 407 832 A2

# VERSTÄRKTE FARBIGE THERMOPLASTISCHE FORMMASSEN AUF DER BASIS VON POLYPHENYLENETHERN UND POLYAMIDEN

Die Erfindung betrifft füllstoffhaltige thermoplastische Formmassen, enthaltend als wesentliche Komponenten

A) 10 bis 84,8 Gew.% eines thermoplastischen Polyamids,

B) 10 bis 84,8 Gew.% eines modifizierten Polyphenylenethers,

C) 5 bis 50 Gew.% Glas- oder Kohlenstoff-Fasern oder deren Mischungen mit einer mittleren Faserlänge $\overline{l_{50}}$ von 150 bis 400 µm und

D) 0,2 bis 4 Gew.% eines Pigmentes sowie darüber hinaus

E) 0 bis 4 Gew.% eines schlagzähmodifizierenden Kautschuks,

F) 0 bis 20 Gew.% eines von D) verschiedenen teilchenförmigen Füllstoffes und

G) 0 bis 20 Gew.% eines Flammschutzmittels.

Weiterhin betrifft die Erfindung die Verwendung dieser Formmassen zur Herstellung von Formkörpern sowie die Formkörper, die unter Verwendung dieser Formmassen als wesentliche Komponenten erhältlich sind.

Blends aus modifizierten Polyphenylenethern und Polyamiden, die gegebenenfalls Füllstoffe enthalten können, sind aus den WO 85/05372, EP-A 260 123, WO 87/05304, EP-A 46 040 und WO 86/02086 bekannt.

Faser- oder teilchenförmige Füllstoffe in Mischungen aus Polyphenylenethern und Polyamiden wirken sich oft nachteilig auf die mechanischen Eigenschaften der Formkörper aus. Dies gilt insbesondere für faserverstärkte Produkte, die für den jeweiligen Anwendungszweck eingefärbt werden müssen, da der gelbliche Naturton dieser Blends nicht immer wünschenswert ist.

Farbige faserverstärkte Formkörper weisen oft nur eine ungenügende Oberfläche auf, da der Farbeindruck meist nicht einheitlich ist.

Die aus dem Stand der Technik bekannten Mischungen weisen durch den Zusatz signifikanter Mengen (meist größer als 10 Gew.%) schlagzähmodifizierender Polymere eine ungenügende Steifigkeit (Elastizitätsmodul) auf.

Der vorliegenden Erfindung lag daher die Aufgabe zugrunde, thermoplastische Formmassen zur Verfügung zu stellen, die ein gutes Gesamtspektrum der mechanischen Eigenschaften und insbesondere eine gute Reproduzierbarkeit der Schlagzähigkeitseigenschaften aufweisen. Darüber hinaus sollte die Steifigkeit und Fließfähigkeit möglichst nicht beeinträchtigt werden und der Farbeindruck der Oberflächen einheitlich sein.

Diese Aufgabe wird erfindungsgemäß durch die eingangs definierten Formmassen gelöst.

Bevorzugte Massen dieser Art und ihre Verwendung sind den Unteransprüchen zu entnehmen.

Die als Komponente A) in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren oder Polyaddition von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Bevorzugt werden lineare Polyamide mit einem Schmelzpunkt über 200° C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.%igen Lösung in 96 %iger Schwefelsäure bei

23 °C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Der Anteil der Polyamide A) an den erfindungsgemäßen Formmassen beträgt 10 bis 84,8, vorzugsweise 20 bis 70 und insbesondere 25 bis 60 Gew.%.

Als Komponente B) enthalten die erfindungsgemäßen Formmassen 10 bis 84,8, bevorzugt 20 bis 70 und insbesondere 25 bis 60 Gew.% eines modifizierten Polyphenylenethers. Bevorzugt sind auch Mischungen, die 55 bis 95 Gew.% eines modifizierten Polyphenylenethers mit $b_1$) enthalten.

Die Polyphenylenether weisen im allgemeinen ein Molekulargewicht (Gewichtsmittelwert) im Bereich von 10.000 bis 80.000, vorzugsweise von 20.000 bis 60.000 auf.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 1 gew.%igen Lösung in Chloroform bei 25 °C nach DIN 53 726.

Die unmodifizierten Polyphenylenether $b_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylen)ether, Poly(2,6-diphenyl-1,4-phenylen)ether, Poly(2,6-dimethoxi-1,4-phenylen)ether, Poly(2,6-diethoxi-1,4-polyphenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)-ether, Poly(2-methyl-6-phenylen-1,4-phenylenether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Polymeren wie Styrol, $\alpha$-Methylstyrol, Vinyltoluol und Chlorstyrol geeignet.

Die erfindungsgemäßen Formmassen können bis zu 30 Gew.% eines Phasenvermittlers enthalten. Dieser erhöht, wenn sie vorhanden ist, die Verträglichkeit zwischen Polyamid und Polyphenylenether und wird vorteilhaft in Mengen von 0,05 bis 30 Gew.% eingesetzt, insbesondere bei der Verwendung eines unmodifizierten Polyphenylenethers $b_1$) in den erfindungsgemäßen Formmassen. Unter einem Phasenvermittler wird eine Substanz verstanden, die das Mischen zweier nicht verträglicher Polymerisate erleichtert und die Haftung zwischen den Phasen in solchen Systemen verbessert (s. z.B. O. Olabisi, Polymer-Polymer Miscibility, Acad. Press 1979, Kap. 1). In der Praxis bedeutet dies, daß die Tendenz zur Delaminierung in mehrphasigen Polymersystemen reduziert wird. Solche Phasenvermittler für A) und B) sind an sich bekannt.

Es können beispielsweise 0,05 bis 15 Gew.%, bezogen auf die Summe von A bis C und, sofern vorhanden, D, E und F, eines Dienpolymeren $b_{11}$), einer Epoxidverbindung $b_{12}$) oder einer Verbindung $b_{13}$), die im Molekül mindestens eine C-C-Doppel- oder -Dreifachbindung und mindestens eine Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppe aufweist, eingesetzt werden. Solche Stoffe werden z.B. in der EP-A 24 120 beschrieben. Es kann sich bei $b_{11}$) um flüssiges Polybutadien, Polyisopren, Poly-1,3-pentadien oder deren Copolymere mit Styrol, $\alpha$-Methylstyrol und p-Hydroxystyrol mit einem Zahlenmittel des Molekulargewichtes von 150 bis 10 000 handeln.

Als epoxidhaltige Verbindungen $b_{12}$) kommen Epoxidharze aus Epichlorhydrin und Polyhydroxyphenolen wie Bisphenol A, Hydrochinon oder Resorcin sowie Glycidether-modifizierte Phenol-oder Kresolnovolake, Phenoxyharze in Frage. Weiterhin können Epoxidharze aus Epichlorhydrin und Polyhydroxyalkoholen wie Ethylen-, Propylen- oder Butylenglykol, Polyethylenglykol, Polypropylenglykol, Glycerin, Trimethylolethan und Pentaerythrit sowie Glycidylether von Phenolen oder aliphatischen Alkoholen, Glycidylderivate von Aminen z.B. das Diglycidylderivat von Anilin verwendet werden. Außerdem können epoxidierte natürliche ungesättigte Öle und Epoxidierungsprodukte der oben erwähnten niedermolekularen Dienpolymeren $b_{11}$) eingesetzt werden. Unter den Verbindungen $b_{13}$) versteht man z.B. Maleinsäureanhydrid, Maleinsäurehydrazid, Dichlormaleinsäureanhydrid, Maleinimid, Maleinsäure, Fumarsäure, deren Amide, Diamide, Monoester, Diester, Bisamide oder Bismaleinimide von $C_1$- bis $C_{20}$-Alkan- oder Arylendiaminen, natürliche Fette und Öle wie Sojabohnenöl, ungesättigte Säuren, wie (Meth)acrylsäure, deren Ester, Amide oder Anhydride, ungesättigte Alkohole, wie Allyl- oder Crotylalkohol, Methylvinylcarbinol oder Propargylalkohol, ungesättigte Amine wie Allyl- oder Crotylamin oder Addukte aus den Dienpolymeren $b_{11}$) und Maleinsäureanhydrid.

Als Phasenvermittler kommen weiterhin vinylaromatische Polymere, die eine der oben unter $b_{13}$) genannten funktionellen Verbindungen enthalten, in Mengen von 2 bis 30, insbesondere 2 bis 15 Gew.%, der erfindungsgemäßen Formmassen, in Frage. Diese Polymeren werden durch Copolymerisation von vinylaromatischen Monomeren, wie Styrol, $\alpha$-Methylstyrol oder p-Methylstyrol mit oben unter $b_{13}$) genannten copolymerisierbaren funktionalisierten Monomeren oder durch Aufpfropfen dieser Monomeren auf vinylaromatische Polymere wie Polystyrol erhalten. Solche Verträglichkeitsvermittler sind z.B. aus den Schriften EP-A 46 040, EP-A 147 874, EP-A 255 184, DE-A 3 535 273 oder DE-A 3 619 224 bekannt. Geeignet sind auch Styrolmaleinsäurecopolymere oder mit Maleinsäureanhydrid modifizierte, gegebenenfalls teilhydrierte Styrol-Butadien-Blockcopolymere.

Es kommen weiterhin in Frage 0,05 bis 15 Gew.%, bezogen auf die Summe von A bis D und, sofern vorhanden, E, F und G oxidierte Polyolefine gemäß EP-A 164 767.

Ebenfalls geeignet sind 0,05 bis 10 Gew.% Siliciumverbindungen, die im Molekül mindestens eine Si-O-C-Gruppe und eine C-C-Doppel-, C-C-Dreifachbindung oder eine nicht direkt an Si gebundene Amino- oder Merkaptogruppe aufweisen wie $\gamma$-Aminopropyl-triethoxy-silan oder Vinyl-tris-(2-methoxyethoxy)silan. Solche Verbindungen sind aus der EP-A 182 163 bekannt.

Funktionalisierte oder modifizierte Polyphenylenether B) sind an sich bekannt, z.B. aus WO-A 86/02086, WO-A 87/00540, EP-A-222 246, EP-A-223 116 und EP-A-254 048.

Üblicherweise wird der Polyphenylenether $b_1$) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem 2. Polymeren der Mischung, dem Polyamid, gewährleistet ist. Der Phasenvermittler wird somit durch die Modifizierung des Polyphenylenethers $b_1$) entbehrlich.

Die Modifizierung wird im allgemeinen durch Umsetzung eines Polyphenylenethers $b_1$) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($b_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen (Monomere $b_{31}$), die Mono- oder Diamide dieser Säuren wie N-Phenylmaleinimid (Monomere $b_{32}$), Maleinhydrazid, das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere $b_{33}$ seien beispielsweise N-Vinylpyrrolidon und (Meth)acryloylcaprolactam genannt.

Bevorzugt wird in den erfindungsgemäßen Formmassen als Komponente B) ein modifizierter Polyphenylenether eingesetzt, der durch Umsetzen von

$b_1$) 9,95 bis 99,94 Gew.% eines unmodifizierten Polyphenylenethers,

$b_2$) 0 bis 90 Gew.% eines vinylaromatischen Polymeren,

$b_3$) 0,05 bis 10 Gew.% mindestens einer Verbindung aus der Gruppe gebildet aus

- $b_{31}$) einer $\alpha,\beta$-ungesättigten Dicarbonylverbindung,
- $b_{32}$) eines Amid-Gruppen enthaltenden Monomeren mit einer polymerisierbaren Doppelbindung und
- $b_{33}$) eines Lactam-Gruppen enthaltenden Monomeren mit einer polymerisierbaren Doppelbindung,

$b_4$) 0 bis 80 Gew.% weiterer pfropfaktiver Monomerer und

$b_5$) 0,01 bis 0,09 Gew.% eines Radikalstarters wobei sich die Gewichtsprozente auf die Summe von $b_1$) bis $b_5$) beziehen, im Verlaufe von 0,5 bis 15 Minuten bei 240 bis 375 °C in geeigneten Misch- und Knetaggregaten wie Zweischneckenextrudern erhältlich ist.

Das vinylaromatische Polymer $b_2$) ist vorzugsweise mit dem eingesetzten Polyphenylenether verträglich.

Das Molekulargewicht dieser an sich bekannten Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Gegebenenfalls können bei der Herstellung des modifizierten Polyphenylenethers B auch weitere Comonomere $b_4$) eingesetzt werden, die unter den Herstellungsbedingungen mit den Komponenten $b_1$ und gegebenenfalls $b_2$) reagieren bzw. auf diese aufpfropfen. Beispielsweise seien hier Acrylsäure, Methacrylsäure, Acrylate, Methacrylate und vinylaromatische Monomere wie Styrol, α-Methylstyrol und Vinyltoluol genannt, um nur einige aufzuführen.

Der Anteil der Komponente $b_4$) beträgt 0 bis 80, vorzugsweise 0 bis 45 und insbesondere nicht mehr als 20 Gew.-%, bezogen auf die Summe der Komponenten $b_1$) bis $b_5$). Besonders bevorzugt werden Formmassen, die keine Komponente $b_4$) enthalten.

Als Radikalstarter $b_5$) seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

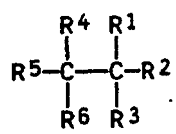

wobei $R^1$ bis $R^6$ unabhängig voneinander Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem π-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Als Komponente C) enthalten die erfindungsgemäßen Formmassen 5 bis 40, vorzugsweise 9,5 bis 40 und insbesondere 10 bis 35 Gew.% Glas- oder Kohlenstoff-Fasern oder deren Mischungen.

Wesentlich ist bei der erfindungsgemäßen Komponente C) die mittlere Faserlänge $\bar{l}_{50}$ im Granulat oder im Formkörper, da die Formkörper, wie es gewünscht wird, ein sehr gutes Gesamtprofil der mechanischen Eigenschaften aufweisen, wenn die mittlere Faserlänge $\bar{l}_{50}$ 150 bis 400 µm, bevorzugt von 170 bis 300 µm und insbesondere von 180 bis 280 µm beträgt.

Als mittlere Faserlänge $\bar{l}_{50}$ wird im allgemeinen der Wert bezeichnet, bei dem 50 % der Fasern eine kleinere und 50 % der Fasern eine größere Länge als der $\bar{l}_{50}$-Wert aufweisen.

Die Glasfasern können sowohl alkalimetallhaltig als auch frei von Alkalimetallen sein. Bei der Verwendung von Glasfasern können diese zur besseren Verträglichkeit mit dem Thermoplasten mit einer Schlichte, z.B. Polyurethan oder Epoxid und einem Haftvermittler, z.B. Aminotrialkoxisilanen ausgerüstet sein. Im allgemeinen haben die verwendeten Fasern einen Durchmesser im Bereich von 6 bis 20 µm.

Die Einarbeitung dieser Glasfasern kann sowohl in Form von Kurzglasfasern als auch in Form von Endlossträngen (Rovings) erfolgen.

Als Komponente D) enthalten die erfindungsgemäßen Formmassen 0,2 bis 4, bevorzugt 0,5 bis 3,5 und insbesondere 0,5 bis 3 Gew.% eines Pigmentes.

Die Pigmente zur Einfärbung von Thermoplasten sind allgemein bekannt, siehe z.B. R. Gächter und H. Müller, Taschenbuch der Kunststoffadditive, Carl Hanser Verlag 1983, S. 494 bis 510. Als erste bevorzugte Gruppe von Pigmenten sind Weißpigmente zu nennen wie Zinkoxid, Zinksulfid, Bleiweiß (2 P=b$CO_3$•Pb($OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz ($Fe_3O_4$), Spinellschwarz (Cu,$(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Neben den wesentlichen Komponenten A), B), C) und D) können die erfindungsgemäßen Formmassen 0 bis 4, bevorzugt 0,5 bis 3,5 und insbesondere 0,1 bis 2 Gew.% eines schlagzähmodifizierenden Kautschuks enthalten. Es können übliche Schlagzähmodifier E) verwendet werden, die für Polyamide (Komponente A) geeignet sind und Kautschuke E), die üblicherweise Polyphenylenether B) schlagzähmodifizieren.

Als kautschukelastische Polymerisate E) für Polyamide A) werden solche bevorzugt, die an der Oberfläche reaktive Gruppen aufweisen.

Derartige Gruppen sind z.B. Epoxy-, Carboxyl-, latente Carboxyl-, Amino-oder Amidgruppen sowie funktionelle Gruppen, die durch Mitverwendung von Monomeren der allgemeinen Formel

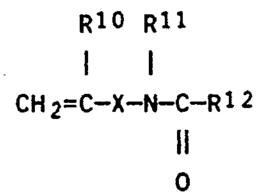

eingeführt werden können,
wobei die Substituenten folgende Bedeutung haben können:
$R^{10}$ Wasserstoff oder eine $C_1$-$C_4$-Alkylgruppe,
$R^{11}$ Wasserstoff, eine $C_1$-$C_8$-Alkylgruppe oder eine Arylgruppe, insbesondere Phenyl,
$R^{12}$ Wasserstoff, eine $C_1$-$C_{10}$-Alkyl-, eine $C_6$-$C_{123}$-Arylgruppe oder $OR^{13}$,
$R^{13}$ eine $C_1$-$C_8$- oder $C_6$-$C_{12}$-Arylgruppe, die gegebenenfalls mit O- oder N-haltigen Gruppen substituiert sein können,
X eine chemische Bindung, eine $C_1$-$C_{10}$-Alkylen- oder $C_6$-$C_{12}$-Arylengruppen oder

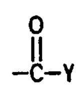

Y O-Z- oder NH-Z und
Z eine $C_1$-$C_{10}$-Alkylen- oder $C_6$-$C_{12}$-Arylengruppe.

Auch die in der EP-A 208 187 beschriebenen Pfropfmonomeren sind zur Einführung reaktiver Gruppen an der Oberfläche geeignet.

Beispiele für Monomere, mit denen die erwähnten funktionellen Gruppen eingeführt werden können, sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure, Monoester dieser Säuren mit Alkoholen ROH, wobei R bis zu 29 Kohlenstoffatome aufweist und z.B. eine Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylgruppe darstellt. Maleinsäureanhydrid sowie Ester von Acrylsäure oder

Methacrylsäure mit tertiären Alkoholen, z.B. tert.-Butylacrylat weisen zwar keine freien Carboxylgruppen auf, kommen in ihrem Verhalten aber den freien Säuren nahe und werden deshalb als Monomere mit latenten Säuregruppen bezeichnet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Der Anteil der von den vorstehend aufgeführten Monomeren abgeleiteten Gruppen beträgt im allgemeinen 0,5 bis 40, vorzugsweise 0,5 bis 25 Gew.% bezogen auf das Gesamtgewicht des Kautschuks.

Diese Monomeren können entweder mit den anderen Monomeren bereits bei der Herstellung des Kautschuks copolymerisiert werden oder aber auf einen bereits fertig vorliegenden, nicht modifizierten Kautschuk aufgepfropft werden (ggf. unter Mitverwendung von Initiatoren, z.B. Radikalstartern).

Bei den Kautschuken handelt es sich im allgemeinen um Polymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril, (Meth)acrylsäure und Acryl- und Methacrylsäureester mit 1 bis 18 C-Atomen in der Alkoholkomponente.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylenresten zu Propylenresten im Bereich von 40:60 bis 90:10 aufweisen.

Die Mooney-Viskositäten (ML1+4/100 °C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100 °C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethyliden-norbornen und Dicyclopentadien. Der Diengehalt der EPDM-Kautschuke beträgt im allgemeinen 0,5 bis 50, insbesondere 3 bis 15 Gew.%, bezogen auf das Gesamtgewicht des Kautschuks.

EPM- bzw. EPDM-Kautschuke werden üblicherweise mit den oben genannten, reaktive Gruppen tragenden Monomeren gepfropft. Hier seien nur Acrylsäure, Methacrylsäure und deren Derivate sowie Maleinsäureanhydrid genannt.

Eine weitere Gruppe von Kautschuken sind Copolymere von Ethylen mit Estern der Acryl- bzw. Methacrylsäure, z.B. mit den Methyl-, Ethyl-, Propyl-, n-, i- bzw. t-Butyl- und 2-Ethylhexylestern. Zusätzlich können die Kautschuke noch die oben genannten reaktiven Gruppen z.B. in Form von Dicarbonsäuren, Derivate dieser Säuren, Vinylestern und -ethern enthalten.

Der Ethylengehalt der Copolymeren liegt im allgemeinen im Bereich von 50 bis 98 Gew.%, der Anteil an Epoxidgruppen enthaltenden Monomeren und der Anteil des Acrylsäure- und/oder Methacrylsäureesters jeweils im Bereich von 1 bis 49 Gew.%.

Bevorzugt sind Olefinpolymerisate aus

50 bis 98,9 insbesondere 60 bis 95 Gew.% Ethylen,

0,1 bis 20, insbesondere 0,15 bis 15 Gew.% Glycidylacrylat und/oder Glycidylmethacrylat, Acrylsäure und/oder Maleinsäure anhydrid,

1 bis 45, insbesondere 10 bis 35 Gew.% n-Butylacrylat und/oder 2-Ethylhexylacrylat.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190 °C und 2,16 kg Belastung).

Geeignete Elastomere zur Schlagzähmodifizierung von Polyamid sind weiterhin reaktive Gruppen enthaltende Pfropfcopolymerisate mit Butadien, Butadien/Styrol-, Butadien/Acrylnitril- und Acrylesterkautschuken als Pfropfgrundlage, wie sie z.B. in den DE-A 16 94 173, DE-A 23 48 377, DE-A 24 44 584 und DE-A 27 26 256 beschrieben werden. Von diesen seien die sogenannten ABS-Polymerisate erwähnt, wie sie in den DE-A-20 35 390, DE-A-22 48 242 und der EP-A-22 216 beschrieben werden.

Als Kautschuk E können Pfropfpolymerisate aus

25 bis 98 Gew.% eines Acrylatkautschuks mit einer Glasübergangstemperatur von unter -20 °C als

Pfropfgrundlage (Basispolymer)
und
2 bis 75 Gew.% eines copolymerisierbaren ethylenisch ungesättigten Monomeren, dessen Homo- bzw. Copolymerisate eine Glasübergangstemperatur von mehr als 25 °C aufweisen, als Pfropfauflage (Pfropfhülle)
eingesetzt werden.

Die Pfropfgrundlage ist ein Acrylat bzw. Methacrylatkautschuk, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden üblicherweise eingesetzt. Als Comonomere in der Pfropfgrundlage seien Acrylnitril, Methacrylnitril, Styrol, α-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A 27 26 256 und der EP-A 50 265 beschrieben.

Bevorzugte vernetzende Monomere sind Triallylcyanurat, Triallylisocyanurat, Triacryloylhexahydro-s-triazin und Triallylbenzole.

Falls die vernetzenden Monomeren mehr als 2 polymerisierbare Doppelbindungen aufweisen, ist es vorteilhaft, ihre Menge auf nicht mehr als 1 Gew.%, bezogen auf die Pfropfgrundlage, zu beschränken.

Gut geeignete Pfropfgrundlagen sind Emulsionspolymerisate mit einem Gelgehalt von mehr als 60 Gew.% (bestimmt in Dimethylformamid bei 25 °C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A 50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Einführung der reaktiven Gruppen in Pfropfcopolymerisate kann z.B. durch Mitverwendung der entsprechenden Monomeren bei der Herstellung der Pfropfhülle erfolgen. In diesem Fall beträgt deren Anteil an der Pfropfmonomermischung vorzugsweise 0,5 bis 30, insbesondere 1 bis 25 Gew.%. Es ist auch möglich, die entsprechenden Monomeren als letzte Pfropfhülle getrennt aufzubringen.

Die Pfropfausbeute, d.h. der Quotient aus der Menge des aufgepfropften Monomeren und der Menge des eingesetzten Pfropfmonomeren liegt im allgemeinen im Bereich von 20 bis 90 %.

Als weitere Kautschuke sind solche zu nennen, die den Polyphenylenether B) schlagzäh modifizieren.

Beispielhaft seien thermoplastische Kautschuke, wie Polybutadien-, Polybuten-, Polyisopren-, Acrylnitrilbutadien-, Ethylenpropylen-, Polyester-oder Ethylenkautschuke und elastomere Copolymere aus Ethylen und Estern der (Meth)acrylsäure, z.B. Ethylenbutylacrylatcopolymere erwähnt. Weiterhin seien genannt Ionomere, Polyoctenylene, Pfropfkautschuke mit einem Pfropfkern aus Butadien oder Isopren oder Alkyl(meth)acrylaten und einer Pfropfhülle aus Styrol oder/und α-Methylstyrol sowie vorzugsweise Styrol-Butadien-Blockcopolymere einschließlich AB-, ABA-, und ABAB-Blockcopolymere, die auch verschmierte Übergänge haben können, Sternblock copolymere und ähnliche, analoge Isoprenblockcopolymerisate und (teil)hydrierte Blockcopolymerisate. Diese Kautschuke können auch in mit vinylaromatischen Monomeren wie Styrol gepfropfter Form eingesetzt werden (EP-A 234 063 und US-A 4 681 915).

Die Kautschuke E weisen vorzugsweise eine Glasübergangstemperatur von unter -30 °C, insbesondere von unter -40 °C auf. Selbstverständlich können auch Mischungen der vorstehend aufgeführten Kautschuktypen eingesetzt werden.

Als weiteren Bestandteil können die erfindungsgemäßen Formmassen 0 bis 20, vorzugsweise 2 bis 15 Gew.% eines von D) verschiedenen teilchenförmigen Füllstoffes (Komponente F) oder deren Mischungen enthalten.

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.% Glasfasern (Komponente C) mit 15 Gew.% Wollastonit und 15 Gew.% Glasfasern (Komponente C) mit 15 Gew.% Wollastonit.

Die erfindungsgemäßen Formmassen können weiterhin Flammschutzmittel G) in Mengen von 0 bis 20 Gew.%, bevorzugt von 1 bis 15 Gew.%, bezogen auf das Gesamtgewicht der Formmassen, enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die

entsprechenden Bromverbindungen besonders wirksam sind.

Beispiele hierfür sind Polymere des 2,6,2′,6′-Tetrabrombisphenols A der Tetrabromphthalsäure, des 2,6-Dibromphenols und 2,4,6-Tribromphenols und deren Derivate.

Bevorzugtes Flammschutzmittel G) ist elementarer Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist 1,2,3,4,7,8,9,10,13,13,14,14-Dodecachloro-1,4,4a,5,6,6a,7,10,10a,11,12,12a-dodecahydro-1,4:710-dimethano-dibenzo(a,e)-cyclooctan (Dechlorane®Plus, Occidental Chemical Corp.) und gegebenenfalls einem Synergisten z.B. Antimontrioxid.

Weitere Phosphorverbindungen wie organische Phosphorsäure, Phosphonate, Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit Hexabrombenzol oder einem chlorierten Biphenyl oder rotem Phosphor und, wahlweise, Antimonoxid verwendet werden.

Typische für die bevorzugten Phosphorverbindungen, die gemäß in der vorliegenden Erfindung verwendet werden können, sind solche der folgenden allgemeinen Formel

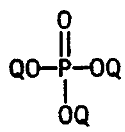

worin Q für gleiche oder verschiedene Reste Kohlenwasserstoffreste, wie Alkyl, Cycloalkyl, Aryl, alkylsubstituiertes Aryl und arylsubstituiertes Alkyl steht, ferner Halogen, Wasserstoff und deren Kombinationen, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5′-trimethylhexylphosphat) Ethyldiphenylphosphat, 2-Ethylhexyldi(p-tolyl)phosphat, Diphenylhydrogenphosphat, Bis-(2-ethylhexyl)phenylphosphat, Tri-(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit Hexabrombenzol und Antimontrioxid bevorzugt.

Als Flammschutzmittel sind auch solche Verbindungen geeignet, die Phosphor-Stickstoff-Bindungen enthalten, wie Phopshonnitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis-(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N′-Ethylenbistetrabromphthalimid Bedeutung erlangt.

Neben den wesentlichen Komponenten A), B), C) und D) sowie gegebenenfalls E) bis G) können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-% bezogen auf das Gesamtgewicht der Komponenten A) bis G).

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Materialien zur Erhöhung der Abschirmung gegen elektromagnetische Wellen wie Metallflocken, -pulver, -fasern, metallbeschichtete Füllstoffe können mitverwendet werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern vorzugsweise Zweischneckenextruder, Brabender-Mühlen oder Banburry-Mühlen sowie Knetern mischt und anschließend extrudiert. Nach der Extrusion wird das Extrudat abgekühlt und zerkleinert.

Um eine möglichst homogene Formmasse zu erhalten, ist eine intensive Durchmischung notwendig. Dazu sind im allgemeinen mittlere Mischzeiten von 0,2 bis 30 Minuten bei Temperaturen von 280 bis 380 °C erforderlich. Die Abmischreihenfolge der Komponenten kann variiert werden, so können zwei oder ggf. drei Komponenten vorgemischt werden, es können aber auch alle Komponenten gemeinsam gemischt werden. Es kann von Vorteil sein, den modifizierten Polyphenylenether $B_2$ in einer ersten Zone eines Extruders herzustellen und in einer oder mehreren nachfolgenden Zonen des Extruders mit den übrigen Komponenten der erfindungsgemäßen Formmasse zu vermischen. Ein solches Verfahren ist in der DE-A 37 02 582 beschrieben.

Die erfindungsgemäßen Formmassen zeichnen sich durch eine gute Schlagzähigkeit kombiniert mit einer guten Steifigkeit aus. Die Oberfläche der Spritzgußteile ist einheitlich gefärbt, d.h. sie weist keine matten Stellen auf.

Infolge dieses Eigenschaftsspektrums eignen sich die aus den erfindungsgemäßen Formmassen herstellbaren Formkörper besonders für Kfz-Teile, Sportgeräte, elektronische und elektrische Gerätebauteile.

Beispiele

Komponente (A1)

Polycaprolactam mit einem K-Wert von 70;
entsprechend einer relativen Viskosität $\eta_{rel}$ von 2,5.

Komponente (A2)

Polyhexamethylenadipinsäureamid mit einem K-Wert nach Fikentscher von 74; gemessen in einer 1 gew.-%igen Lösung von 96 gew.-%iger Schwefelsäure bei 25 °C. Dieser K-Wert entspricht einer relativen Viskosität $\eta_{rel}$ von 2,7.

Komponente (B1)

Ein modifizierter Polyphenylenether aus
94 Gew.% Poly(2,6-dimethyl-1,4-phenylen)ether ($\eta_{red}$ = 0,48, gemessen in einer 1 gew.%igen Lösung in Chloroform bei 25 °C),
4,5 Gew.% Polystyrol (Schmelzfließindex MFI bei 200 °C/5 kg Belastung: 24 g/10 min)
1,45 Gew.% Fumarsäure und
0,05 Gew.% 3,4-Dimethyl-3,4-diphenylhexan (Initiator)
wurde durch Mischen der Komponenten bei Temperaturen von 290 bis 310 °C in einem Zweischneckenextruder mit anschließender Entgasung hergestellt. Die Schmelze wurde durch ein Wasserbad geleitet, granuliert und getrocknet.

Komponente (B2)

Ein modifizierter Polyphenylenether aus
94 Gew.% Poly(2,6-dimethyl-1,4-phenylen)ether ($\eta_{red}$ = 0,48, gemessen in einer 1 gew.%igen Lösung in Chloroform bei 25 °C),
4,5 Gew.% Polystyrol (Schmelzfließindex MFI bei 200 °C/5 kg Belastung: 24 g/10 min)
1,45 Gew.% Maleinsäureanhydrid und
0,05 Gew.% 3,4-Dimethyl-3,4-diphenylhexan (Initiator)
wurde durch Mischen der Komponenten bei Temperaturen von 290 bis 310 °C in einem Zweischneckenextruder mit anschließender Entgasung hergestellt. Die Schmelze wurde durch ein Wasserbad geleitet, granuliert und getrocknet.

Komponente (B1*) (zum Vergleich)

Ein unmodifizierter Polyphenylenether mit einem mittleren Molekulargewicht (Gewichtsmittelwert) $M_w$ von 30.000

Komponente (C1)

Glasfasern (mit Polyurethanschlichte) mit einem mittleren Durchmesser von 13 µm.

Komponente (C2)

Glasfasern (mit Epoxidschlichte) mit einem mittleren Durchmesser von 10µm.

Komponente (C3)

Kohlenstoff-Fasern mit einem mittleren Durchmesser von 7 µm.

Komponente (D1)

Titandioxid (Rutil-Typ) mit einer Dichte von 4 g/cm$^3$ und einem mittleren Teilchendurchmesser ($d_{50}$) von 0,4 µm.

Komponente (D2)

Ruß mit einem mittleren Teilchendurchmesser ($d_{50}$) von 13 nm und einer spez. Oberfläche von 430 m$^2$/g.

Komponente (E1)

Ein Blockcopolymer aus
27 Gew.% Styrol und
63 Gew.% hydriertem Isopren.

Komponente (E2)

Ein statistisches Copolymer aus
70 Gew.% Ethylen,
25 Gew.% n-Butylacrylat und

5 Gew.% Acrylsäure.
MFI: 21 g/10 min (190 °C; 2,16 kg)

Komponente (G)

Roter Phosphor der mittleren Teilchengröße ($d_{50}$) von 45 µm.

Herstellung der Formmassen

Die Komponenten A), B) und D) sowie gegebenenfalls E) bis G) wurden in einem Zweiwellenextruder bei einer Zylindertemperatur von 290 °C gemischt. Stromabwärts wurde durch eine Öffnung die Komponente C) zugegeben. Die Schmelze wurde durch ein Wasserbad geleitet und granuliert. Das getrocknete Granulat wurde bei 290 °C zu Normkleinstäben, Schulterstäben und Rundscheiben gespritzt.

Die Messung der Schlagzähigkeit $a_n$ wurde nach DIN 53 435 durchgeführt, die Zugfestigkeit wurde nach DIN 53 455 bestimmt. Der Farbeindruck wurde visuell vergleichend an Rundscheiben beurteilt.

Die mittlere Faserlänge $\overline{l_{50}}$ wurde sowohl im Granulat als auch im Spritzgußteil bestimmt. Dazu wurden 1 bis 1,5 g Granulat oder Formteil bei 500 °C verascht (Glasfasern). Bei Kohlenstoff-Fasern wurde die Polymermatrix in einer Mischung aus Hexafluorisopropanol und Chloroform (3:7) aufgelöst. Die zurückgebliebenen Fasern wurden auf einem Objektträger in Mineralöl suspendiert und unter einem Lichtmikroskop (Vergrößerung 40:1) fotographiert und ausgezählt. Bei jedem Bild (pro 1,5 g ca. 6 Bilder) wurden ca. 400 bis 500 Fasern zur Ermittlung der mittleren Faserlänge $\overline{l_{50}}$ berücksichtigt.

Die Ergebnisse der Messungen und die Zusammensetzung der Formmassen sind der Tabelle zu entnehmen.

Tabelle

| Nr. | Zusammensetzung [Gew.%] | | | | | | Schlagzähigkeit $a_n$ [kJ/m$^2$] | Zugfestigkeit [N/mm$^2$] | Farbeindruck | mittlere Faserlänge $\overline{l_{50}}$[μm] |
|---|---|---|---|---|---|---|---|---|---|---|
| 1 | 35 % A1 | 32 % B1 | 30 % C2 | 3 % D1 | - | - | 34 | 155 | einheitlich | 195 |
| 2 | 35 % A2 | 33,5 % B2 | 30 % C1 | 1,5 % D2 | - | - | 37 | 161 | einheitlich | 260 |
| 3 | 39 % A2 | 38,5 % B2 | 20 % C1 | 2 % D1 + 0,5 % D2 | - | - | 35 | 137 | einheitlich | 290 |
| 4 | 39,5 % A1 | 39,5 % B1 | 20 % C3 | 1 % D2 | - | - | 30 | 189 | einheitlich | 195 |
| 5 | 33 % A2 | 30 % B1 | 30 % C1 | 3,3 % D2 | - | 3 % G | 36 | 169 | einheitlich | 235 |
| 6 | 37 % A2 | 30 % B1 | 30 % C1 | 1,5 % D2 | 1,5 % E1 | - | 33 | 153 | einheitlich | 240 |
| 1*) | 31 % A1 | 29 % B1 | 30 % C2 | 3 % D1 | 7 % E1 | - | 27 | 102 | fleckig | 140 |
| 2*) | 37,5 % A1 | 35,5 % B1 | 20 % C2 | - | 7 % E1 | - | 28 | 88 | einheitlich | - |
| 3*) | 33 % A2 | 30 % B2 | 30 % C1 | 3 % D1 | 4 % E2 | - | 27 | 112 | fleckig | 135 |
| 4*) | 35 % A1 | 27 % B* | 30 % C1 | 3 % D1 | - | 5 % X**) | 8 | 160 | fleckig | 140 |

*) Vergleichsversuch gemäß der Lehre der EP 46 040

**) Copolymeres aus Styrol (75 %) und Maleinsäureanhydrid (25 %) (Phasenvermittler)

## Ansprüche

1. Füllstoffhaltige thermoplastische Formmassen, enthaltend als wesentliche Komponenten
A) 10 bis 84,8 Gew.% eines thermoplastischen Polyamids,
B) 10 bis 84,8 Gew.% eines modifizierten Polyphenylenethers,
C) 5 bis 50 Gew.% Glas- oder Kohlenstoff-Fasern oder deren Mischungen mit einer mittleren Faserlänge $\overline{l_{50}}$ von 150 bis 400 µm und
D) 0,2 bis 4 Gew.% eines Pigmentes sowie darüber hinaus
E) 0 bis 4 Gew.% eines schlagzähmodifizierenden Kautschuks,
F) 0 bis 20 Gew.% eines von D) verschiedenen teilchenförmigen Füllstoffes und
G) 0 bis 20 Gew.% eines Flammschutzmittels.

2. Füllstoffhaltige, thermoplastische Formmassen nach Anspruch 1, enthaltend
A) 20 bis 70 Gew.%,
B) 20 bis 70 Gew.%,
C) 9,5 bis 40 Gew.%,
D) 0,5 bis 3,5 Gew.%.

3. Füllstoffhaltige, thermoplastische Formmassen nach Anspruch 1, enthaltend
A) 20 bis 69,4 Gew.%,
B) 20 bis 69,4 Gew.%,
C) 10 bis 35 Gew.%,
D) 0,5 bis 3 Gew.%,
E) 0,1 bis 2 Gew.%.

4. Füllstoffhaltige, thermoplastische Formmassen nach den Ansprüchen 1 bis 3, in denen die mittlere Faserlänge $\overline{l_{50}}$ der Komponente C) 170 bis 300 µm beträgt.

5. Füllstoffhaltige, thermoplastische Formmassen nach den Ansprüchen 1 bis 4, in denen die Komponente B) ein modifizierter Polyphenylenether ist, hergestellt aus
$b_1$) 9,95 bis 99,94 Gew.% eines Polyphenylenethers,
$b_2$) 0 bis 90 Gew.% eines vinylaromatischen Polymeren,
$b_3$) 0,05 bis 10 Gew.% mindestens einer Verbindung aus der Gruppe gebildet aus
$b_{31}$) einer $\alpha,\beta$-ungesättigten Dicarbonylverbindung,
$b_{32}$) eines Amid-Gruppen enthaltenden Monomeren mit einer polymerisierbaren Doppelbindung und
$b_{33}$) eines Lactam-Gruppen enthaltenden Monomeren mit einer polymerisierbaren Doppelbindung,
$b_4$) 0 bis 80 Gew.% weiterer pfropfaktiver Monomerer und
$b_5$) 0,01 bis 0,09 Gew.% eines Radikalstarters.

6. Füllstoffhaltige, thermoplastische Formmassen nach den Ansprüchen 1 bis 5, enthaltend Titandioxid oder Ruß oder deren Mischungen als Komponente D).

7. Verwendung der thermoplastischen Formmassen gemäß den Ansprüchen 1 bis 6 zur Herstellung von Formkörpern.

8. Formkörper, erhältlich aus den thermoplastischen Formmassen gemäß den Ansprüchen 1 bis 6.